Europäisches Patentamt

European Patent Office

Office européen des brevets

(11) Veröffentlichungsnummer: **0 316 682**
**A1**

## (12) EUROPÄISCHE PATENTANMELDUNG

(21) Anmeldenummer: **88118376.8**

(22) Anmeldetag: **04.11.88**

(51) Int. Cl.⁴: **B01D 45/10 , B01D 50/00**

(30) Priorität: **14.11.87 DE 3738737**

(43) Veröffentlichungstag der Anmeldung:
**24.05.89 Patentblatt 89/21**

(84) Benannte Vertragsstaaten:
**AT BE DE FR GB NL**

(72) Erfinder: **Meiss, Otto**
**Hochfeldstrasse 20**
**D-6700 Ludwigshafen(DE)**
Erfinder: **Hajok, Ernst**
**Georg-Herwegh-Strasse 32**
**D-6700 Ludwigshafen(DE)**

(54) Verfahren zur Ablösung von Verkrustungen in Tropfenabscheidern.

㊼ Verfahren zur Ablösung von Verkrustungen in Tropfenabscheidern, wobei mittels einer über den Tropfenabscheider geleiteten Spüllösung die Verkrustungen abgelöst werden.

FIG.1

EP 0 316 682 A1

### Verfahren zur Ablösung von Verkrustungen in Tropfenabscheidern

Die Erfindung betrifft ein Verfahren zur Ablösung von Verkrustungen in Tropfenabscheidern.

Tropfenabscheider - im folgenden Abscheider genannt - werden häufig in Chemieanlagen eingesetzt. Ihre Aufgabe besteht im wesentlichen darin, Tropfen aus einem Abgasstrom, der vorher mit Waschflüssigkeit beispielsweise in einer Abgaswaschanlage gewaschen wurde, auszuscheiden, damit die Tropfen nicht über einen nachgeschalteten Kamin in die Atmosphäre gelangen. So werden beispielsweise Abscheider der Firma Euroform in Fabrikationsanlagen zur Herstellung von Kalkammonsalpeter eingesetzt.

Beim Einsatz dieser Abscheider wird in einer Abgaswaschanlage gereinigtes Abgas mittels eines Ventilators durch ein Tropfenabscheidepaket - im folgenden Abscheidepaket genannt - eines Abscheiders hindurchgesaugt und anschließend über einen Kamin in die Atmosphäre gedrückt. Dabei werden mitgerissene Tropfen in Tropfenfangrinnen - im folgenden Fangrinnen genannt -, die in dem Abscheidepaket angeordnet sind, zurückgehalten und nach unten aus dem Abscheider abgeleitet.

Als Nachteil erweist sich hierbei, daß die Fangrinnen auch gleichzeitig im Abgas enthaltene, nicht ausgewaschene Feinststäube zurückhalten. Diese Feinststäube agglomerieren in den Fangrinnen und führen häufig zum völligen Verschluß der Fangrinnen. Ein Abscheiden der Tropfen aus dem Abgas ist dadurch nicht mehr gewährleistet.

Als Folge des Dargelegten wurden die Abscheidepakete in festgelegten Zeitabständen aus dem Abscheider herausgenommen und für mehrere Tage in eine die Verkrustungen ablösende Lösung getaucht. Diese Art der Reinigung ist jedoch bezüglich Sicherheit und Umwelt nicht befriedigend.

Es stellte sich daher die Aufgabe, mittels eines den Fabrikationsprozess nicht beeinträchtigenden Verfahrens, die Abscheider zu reinigen, wobei gleichzeitig die Ansprüche in Bezug auf Sicherheit und Umwelt befriedigend gelöst werden.

Diese Aufgabe wird erfindungsgemäß dadurch gelöst, daß mittels einer über den Abscheider geleiteten Spüllösung die Verkrustungen abgelöst werden.

Ein Ausführungsbeispiel des Abscheiders ist in der Zeichnung dargestellt und nachstehend wird das erfindungsgemäße Verfahren detailliert beschrieben.

Figur 1 zeigt einen Querschnitt durch ein Abscheidepaket

Figur 2 zeigt ein Abscheidepaket mit aufgesetztem Spülkasten.

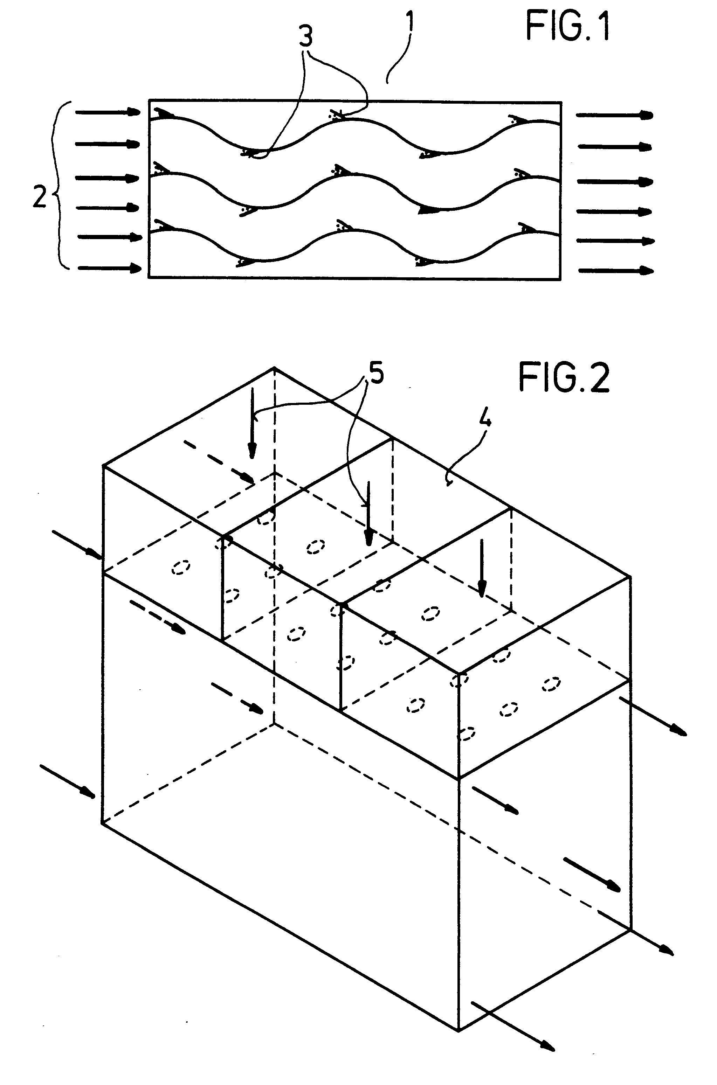

Gemäß Figur 1 wird durch das Abscheidepaket 1 eines Abscheiders mittels eines Ventilators ein aus einer Abgaswaschanlage kommender Abgasstrom 2 hindurchgesaugt. Die Fangrinnen 3 sind bereits - wie dargestellt - teilweise bzw. voll mit Verkrustungen zugesetzt. Erfindungsgemäß wurde - wie in Figur 2 dargestellt -, auf das Abscheidepaket ein geschlossener in mehreren Kammern unterteilter Spülkasten 4, der mit einem perforierten Bodenblech ausgestattet ist, aufgesetzt. Zur Auflösung der Verkrustungen wird jede einzelne Kammer mit der Spüllösung 5 beschickt, die anschließend durch das Abscheidepaket gleichmäßig verteilt hindurchfließt und die Verkrustungen allmählich auflöst. Die mit dem Verkrustungsmaterial angereicherte Spüllösung wird aufgefangen und entweder in die Abgaswaschanlage zurückgeführt oder entsorgt. Durch die Unterteilung des Spülkastens in verschiedene Kammern ist es außerdem möglich, das Abscheidepaket abschnittsweise bzw. mit verschiedenen Spüllösungen zu spülen.

### Ansprüche

Verfahren zur Ablösung von Verkrustungen in Tropfenabscheidern, dadurch gekennzeichnet, daß mittels einer über den Tropfenabscheider geleiteten Spüllösung die Verkrustungen abgelöst werden.

FIG.1

FIG.2

552/87

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 435 472  (H. HOLTER) <br> * Insgesamt * <br> --- | 1 | B 01 D  45/10 <br> B 01 D  50/00 |
| X | FR-A-2 057 425  (TUNZINI AMELIORAIR) <br> * Seite 1, Zeilen 1-9,19-31; Figur 3 * <br> --- | 1 | |
| X | US-A-4 157 250  (REGEHR) <br> * Spalte 3, Zeilen 32-41 * <br> ----- | 1 | |

|  |  |  | RECHERCHIERTE SACHGEBIETE (Int. Cl.4) |
|---|---|---|---|
|  |  |  | B 01 D  45/00 <br> B 01 D  50/00 |

Der vorliegende Recherchenbericht wurde für alle Patentansprüche erstellt

| Recherchenort | Abschlußdatum der Recherche | Prüfer |
|---|---|---|
| DEN HAAG | 15-02-1989 | POLESAK, H.F. |